# EUROPEAN PATENT SPECIFICATION

(11) **EP 2 770 756 B1**
(45) Date of publication and mention of the grant of the patent: **31.08.2022**
(21) Application number: 12842343.1
(22) Date of filing: 18.07.2012
(51) Int. Cl.: H04W 4/02

(54) **CONTACT DISPLAY METHOD, INSTANT MESSAGING SOFTWARE CLIENT, AND CLIENT SERVER**
KONTAKTANZEIGEVERFAHREN, SOFTWARECLIENT FÜR SOFORTNACHRICHTEN UND CLIENTSERVER
PROCÉDÉ D'AFFICHAGE DE CONTACTS, CLIENT DE LOGICIEL DE MESSAGERIE INSTANTANÉE ET SERVEUR CLIENT

(30) Priority: 20.10.2011 CN 201110320427
(43) Date of publication of application: 27.08.2014
(73) Proprietor: Tencent Technology (Shenzhen) Company Limited, Shenzhen City, Guangdong 518057 (CN)
(72) Inventor: LIU, Shilei, Shenzhen Guangdong 518000 (CN)
(74) Representative: Gunzelmann, Rainer
(86) International application number: PCT/CN2012/078802
(87) International publication number: WO 2013/056579

(56) References cited:
- CN-A- 102 186 136
- US-A1- 2006 074 601
- US-A1- 2007 271 367
- US-A1- 2008 070 593
- US-A1- 2009 181 699
- US-A1- 2009 319 616
- US-A1- 2010 205 242
- HU, D.H. ET AL.: 'GPS-based location extraction and presence management for mobile instant messenger.' EUC'07 PROCEEDINGS OF THE 2007 INTERNATIONAL CONFERENCE ON EMBEDDED AND UBIQUITOUS COMPUTING. 2007, pages 309 - 320, XP055064518

## Description

This application claims priority to Chinese Patent Application No. 2011103204276, filed before the Chinese Patent Office on October 20, 2011 and entitled "CONTACT DISPLAY METHOD, INSTANT MESSAGING CLIENT, AND SERVER".

### TECHNICAL FIELD

The present disclosure relates the field of instant messaging, and in particular, to a contact display method, a contact display system.

### BACKGROUND

With development of Internet technologies, more and more people implement communications using instant messaging software. Current instant messaging software prevailing on the market all display contacts of a user in the form of a list. Depending on actual requirements, the user may categorize the contacts into groups based on a specific social relationship, and display the contacts of the same category in a user-defined list. In addition, the user may further create a user-defined list named by using geographic location, and categorize and display the contacts according to the geographic locations.

US patent with publication No. 2010/0205241 A1 has disclosed techniques to exchange local information between a location-aware client device and friend devices via a starter that is configured to communicate with one or more friend finding services. The server can perform conversion of format of the location information when the location information is not supported.

Using the conventional categorization method, contacts in the same geographic location, for example, the same province or the same city, are arranged in the same list, which, however, requires user's manual operations. When there are more contacts or more distribution areas of the contacts are involved, the user needs to perform the operations repeatedly or create a plurality of user-defined lists, causing a complicated process and a low flexibility. In addition, compared with a generic mode of displaying contacts, such a list-based display mode has no essential improvement, and achieves less visual presentation and poor spatial and regional sense.

### SUMMARY

The invention is defined by the claims.

Embodiments of the present disclosure provide a contact display method, a contact display system. The technical solutions are as follows: An embodiment of the present disclosure provides a contact display method, including:
acquiring, by an instant messaging client, geographic location information of a contact from a server; and
upon receiving a request for displaying a first interface, displaying, by the instant messaging client, the first interface, and displaying the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map, the geographic location information is an administrative region name.

An embodiment of the present disclosure provides a contact display method, including:
acquiring, by a server, geographic location information of a contact; and
upon receiving a request for geographic location information from an instant messaging client, sending the geographic location information of the contact to the instant messaging client, such that the instant messaging client displays the first interface upon receiving a request for displaying the first interface, and displays the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map, the geographic location information is an administrative region name.

An embodiment of the present disclosure provides an instant messaging client, including:
a receiving module, configured to receive geographic location information of a contact from a server; and
a displaying module, configured to: upon receiving a request for displaying a first interface, display the first interface, and display the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map, the geographic location information is an administrative region name.

An embodiment of the present disclosure provides a server, including:
an acquiring module, configured to acquire geographic location information of a contact; and
a sending module, configured to: upon receiving a request for geographic location information from an instant messaging client, send the geographic location information of the contact to the instant messaging client, such that the instant messaging client displays the first interface upon receiving a request for displaying the first interface, and displays the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map, the geographic location information is an administrative region name.

An embodiment of the present disclosure provides a contact display system, including:
an instant messaging client, configured to: receive geographic location information of a contact from a server; upon receiving a request for displaying a first interface, display the first interface and display the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map, the geographic location information is an administrative region name; and
a server, configured to: acquire geographic location information of a contact; and upon receiving a request for geographic location information from an instant messaging client, send the geographic location information of the contact to the instant messaging client, such that, upon receiving a request for displaying a first interface, the instant messaging client displays the first interface, and display the contact in a position, corresponding to the geographic location information, on the first interface; where the first interface includes a plurality of areas, each of the plurality of areas corresponding to an administrative region in the preset map, the geographic location information is an administrative region name.

The technical solutions according to the embodiments of the present disclosure achieve the following beneficial effects:
Geographic location information of a contact is acquired, and the contact is displayed in a corresponding position on a map interface according to the geographic location information of the contact. In this way, a contact list does not need to be re-defined, thereby simplifying operations on the contact list. In addition, contacts may be differentiated according to geographic locations thereof, such that the contacts are displayed more visually, facilitating simultaneous operations on the contacts pertaining to the same area.

### BRIEF DESCRIPTION OF THE DRAWINGS

To illustrate the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and persons of ordinary skill in the art may derive other drawings based on these accompanying drawings without creative efforts.
FIG. 1 is a flowchart of a contact display method according to an embodiment of the present disclosure;
FIG. 2 is a flowchart of a contact display method according to an embodiment of the present disclosure;
FIG. 3 is a flowchart of a contact display method according to an embodiment of the present disclosure;
FIG. 4 is a flowchart of a contact display method according to an embodiment of the present disclosure;
FIG. 5 is a flowchart of a contact display method according to an embodiment of the present disclosure;
FIG. 6 is a schematic structural diagram of an instant messaging client according to an embodiment of the present disclosure;
FIG. 7 is a schematic structural diagram of another instant messaging client according to an embodiment of the present disclosure;
FIG. 8 is a schematic structural diagram of still another instant messaging client according to an embodiment of the present disclosure;
FIG. 9 is a schematic structural diagram of still another instant messaging client according to an embodiment of the present disclosure;
FIG. 10 is a schematic structural diagram of a server according to an embodiment of the present disclosure;
FIG. 11 is a schematic structural diagram of another server according to an embodiment of the present disclosure; and
FIG. 12 is a schematic structural diagram of still another server according to an embodiment of the present disclosure.

### DETAILED DESCRIPTION

To make the objectives, technical solutions, and advantages of the present disclosure clearer, the embodiments of the present disclosure are described in detail below with reference to the accompanying drawings.

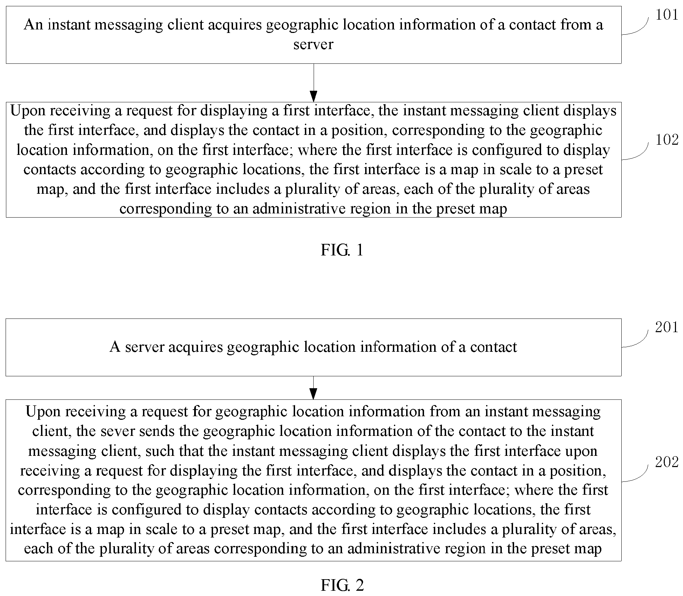

FIG. 1 is a flowchart of a contact display method according to an embodiment of the present disclosure. In this embodiment, interaction subjects may be an instant messaging client and a server, where the instant messaging client may be a QQ client, a TM client, or the like. Referring to FIG. 1, the method according to this embodiment specifically includes:
101. The instant messaging client acquires geographic location information of a contact from a server.

In this embodiment, the geographic location information of the contact refers to an administrative region where the contact is located. For example, the administrative region where a contact A is currently located is Beijing, geographic location information of contact A is Beijing. The name of the administrative region may be, for example, province, city, and municipality, and may further be detailed to district or county according to settings of a user of the instant messaging client, which is not limited in this embodiment.

The acquiring, by an instant messaging client, geographic location information of a contact from a server specifically includes:
sending a request for geographic location information to the server; and
receiving the geographic location information of the contact from the server, where the geographic location information is an administrative region name received by the server, or the geographic location information is an administrative region name acquired by the server according to received current IP address information or coordinate information of the contact.

In another embodiment, the geographic location information is determined by the server according to the received administrative region name and the current IP address information of the contact or coordinate information of the contact.

102. Upon receiving a request for displaying a first interface, the instant messaging client displays the first interface, and displays the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map.

In this embodiment, a first interface is preset, where the first interface is configured to display a contact according to geographic location information of the contact, and the first interface may be a map in scale to a preset map. For example, when the preset map is China map, the first interface is in scale to the China map, each of the regions on the first interface corresponds to an administrative region in the China map. The size of the first interface is suitable for screen display, and the scale may be set by the user of the instant messaging client.

Further, after the displaying the first interface, and displaying the contact in a position, corresponding to the geographic location information, on the first interface, the method further includes:
Upon receiving a request for operation a specified area, sending the request to all first contacts, where geographic location information of the first contact is the specified area.

Further, after the displaying the first interface, and displaying the contact in a position, corresponding to the geographic location information, on the first interface, the method further includes:
Upon receiving a request for a list of contacts in a specified area of the first interface, acquiring all first contacts, where the geographic location information of the first contact is the specified area; and displaying all first contacts in the specified area in the form of a list with a preset number of first contacts per page.

According to the method provided in this embodiment, geographic location information of a contact is acquired, and the contact is displayed in a corresponding position on a map interface according to the geographic location information of the contact. In this way, a contact list does not need to be re-defined, thereby simplifying operations on the contact list. In addition, contacts may be differentiated according to geographic locations thereof, such that the contacts are displayed more visually, facilitating simultaneous operations on the contacts pertaining to the same area.

FIG. 2 is a flowchart of a contact display method according to an embodiment of the present disclosure. In this embodiment, the execution subject is a server, where the server may be a QQ server, a TM server, or the like. Referring to FIG. 2, the method according to this embodiment specifically includes:
201. The server acquires geographic location information of a contact.
202. Upon receiving a request for geographic location information from an instant messaging client, the client sever sends the geographic location information of the contact to the instant messaging client, such that the instant messaging client displays the first interface upon receiving a request for displaying the first interface, and displays the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map.

The acquiring, by the server, geographic location information of a contact specifically includes:
receiving, by the server, an administrative region name input by the contact, and using the administrative region name as the geographic location information of the contact; or
acquiring, by the server, current IP address information or coordinate information of the contact, acquiring a current administrative region name of the contact according to the current IP address information or coordinate information of the contact, and using the current administrative region name of the contact as the geographic location information.

The acquiring, by the server, geographic location information of a contact specifically includes:
acquiring, by the server, current IP address information or coordinate information of the contact, acquiring a current administrative region name of the contact according to the current IP address information or coordinate information of the contact, judging whether the current administrative region name of the contact is consistent with locally stored geographic location information of the contact, if inconsistent, replacing the locally stored geographic location information of the contact with the current administrative region name of the contact, and using the current administrative region name as the geographical location information of the contact.

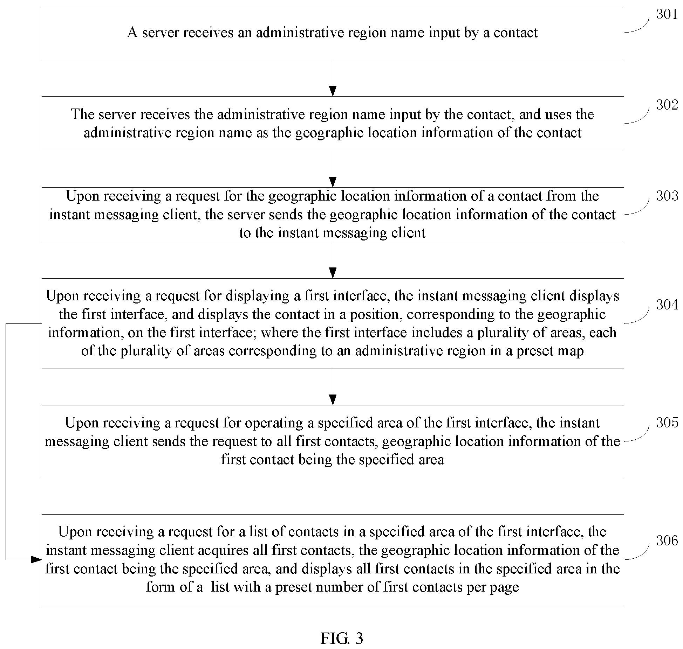

FIG. 3 is a flowchart of a contact display method according to an embodiment of the present disclosure. In this embodiment, interaction subjects may be an instant messaging client and a server, where the instant messaging client may be a QQ client, a TM client, or the like. Referring to FIG. 3, the method according to this embodiment specifically includes:
301. A server receives an administrative region name input by a contact.

A person skilled in the art may acquire that, when a user inputs an administrative region name on an instant messaging client, the instant messaging client sends the administrative region name to the server, and the server stores the administrative region name.

In this embodiment, step 301 is directed to contacts of the user of the instant messaging client; with respect to a server, the server receives administrative region names input by all users logging in to the server. For example, the server receives administrative region names input by users A, B, C, and D, whereas with respect to the instant messaging client, only contacts A and B are contacts of the user of the instant messaging client. The embodiments of the present disclosure are described only from the perspective of the instant messaging client.

302. The server receives an administrative region name input by the contact, and uses the administrative region name as the geographic location information of the contact.

In this embodiment, the geographic location information may be a combination of a plurality of hierarchical-arranged administrative regions. For example, if the administrative region input by the contact is Chaoyang District, Beijing City, China, the geographic location information includes China, Beijing City, Chaoyang District.

303. Upon receiving a request for geographic location information from the instant messaging client, the server sends the geographic location information of the contact to the instant messaging client.

In this embodiment, when the request for geographic location information is received, all geographic location information of the contact may be sent to the instant messaging client; alternatively, only geographic location information preset on the instant messaging client may be sent according to predefined settings on the instant messaging client. In this case, step 303 may specifically include: upon receiving the request for geographic location information from the instant messaging client, sending, by the server according to geographic location information specified in the request for geographic location information, the specified geographic location information of the contact to the instant messaging client. For example, if the geographic location information specified in the request for geographic location information sent by the instant messaging client is city, the server sends "Beijing" as the requested geographic location information to the instant messaging client.

When the user desires to perform an operation related to the geographic location information, the user may trigger the request for geographic location information using an option or button provided on the instant messaging client, and the instant messaging client sends the request for the geographic location information to the server. For example, the operation related to the geographic location information may be displaying a contact according to the geographic location information thereof, and displaying the geographic location information of the contact.

304. Upon receiving a request for displaying a first interface, the instant messaging client displays the first interface, and displays the contact in a position, corresponding to the geographic information, on the first interface; where the first interface includes a plurality of areas, each of the plurality of areas corresponding to an administrative region in a preset map.

In this embodiment, if the preset map is China map, each of the plurality of areas of the first interface corresponds to an administrative region in the China map, where a tier of the administrative region may be preset by the instant messaging client; and if the administrative region is in the unit of city, the contacts are displayed according to the regional boundary of city in the map, and each of the contacts is displayed, according to the city specified by the geographic location information thereof, in the area of the map corresponding to the city. Preferably, if the number of contacts corresponding to an area is larger than or equal to a preset threshold, the number of contacts is displayed in the area; and if the number of contacts corresponding to the area is smaller than the preset threshold, name and nickname of each of the contacts are displayed in the area.

For example, the first interface includes a plurality of areas, where each of the plurality of areas corresponds to an administrative region in the China map. Herein, the case where the scale of the administrative region is city is only used as an example for description. Assuming that the preset threshold is 5, if the number of contacts corresponding to area "Beijing" is 15 which is larger than the preset threshold 5, "15" may be displayed in the area; and if the number of contacts corresponding to area "Shenzhen" is 2, i.e., contacts A and B, "A" and "B" are displayed in the area, where A and B are vertically displayed. Nevertheless, contacts may be displayed horizontally or in other manners, which is not limited in this embodiment.

In this embodiment of the present disclosure, the case where the preset map is China map is only used as an example for description. In other embodiments, the map corresponding to the first interface may be set by the user of the instant messaging client. For example, the map corresponding to the first interface may be the world map, and in this case, the areas may be determined according to country boundaries or continent boundaries.

Further, after step 303 and prior to step 304, the method further includes: determining a preset map by the instant messaging client according to the geographic location information of the contact. Specifically, the instant messaging client judges whether the geographic location information of the contact corresponds to an administrative region of China; if true, uses the China map as the preset map; and otherwise, uses the world map as the preset map, or queries whether the user needs to set the preset map as the world map, and determines the preset map according to user's selection. To be specific, when the user selects the China map, the China map is used as the preset map; and when the user selects the world map, the world map is used as the preset map. It should be noted that the judgment on whether the geographic location information corresponds to an administrative region of China may be performed according to preset China administrative regions or a high-tier geographic location indicated in user geographic location information. For example, if the user geographic location information is A City, it is acquired that A city is an administrative region of China according to a preset database of China administrative region division. Still for example, if the user geographic location information is A City, China, a high-tier geographic location indicated therein is China, and it is thus acquired that the user geographic location information corresponds to an administrative region of China.

This embodiment is described by using display of the entire first interface as an example. With respect to practical operations, since the display of the first interface is subject to the client size, functions of zoom-in and zoom-out may be provided for the user. Specifically, upon receiving a request for zooming in a specified area of the first interface, the instant messaging client zooms in the area; displays a sub-area of the area, the sub-area being a administrative region the tier of which is lower than that of the area; and displays contacts corresponding to the sub-area in a position, corresponding to the geographic location information, on the area. For example, when the area is a province, the sub-area thereof may be a city and/or a district; when the area is a city, the sub-area thereof may be a district. For example, upon receiving a request for zooming in area "Beijing" of the first interface, the instant messaging client zooms in the area; displays the sub-area, such as "Chaoyang District", "Dongcheng District", "Haidian District" or the like, of the area; and displays contacts corresponding to the sub-area or the number of contacts in a position of each of the sub-areas. Preferably, if the number of contacts corresponding to a sub-area is larger than or equal to a preset threshold, the number of contacts is displayed in the sub-area; and if the number of contacts corresponding to the sub-area is smaller than the preset threshold, name and nickname of each of the contacts are displayed in the sub-area.

305. Upon receiving a request for operating a specified area of the first interface, the instant messaging client sends the request to all first contacts, geographic location information of the first contact being the specified area.

In this embodiment, the request refers to a contact-directed operation request for sending an instant message or creating a group. When the operation request is directed to a specified area of the first interface, the request may be directed to all first contacts in the area, or directed to a specified contact in the area, which is implemented specifically according to an object of the operation request. When the operation request is to send a request for creating a group to all first contacts, the operation request is sent to all first contacts; and when the operation request is to send a request for creating a group to a specified contact of the first contacts, the operation request is sent to the specified contact of the first contacts. The first contact refers to a contact whose geographic location information is the specified area. For example, if the area is Shanghai, the first contact is a contact whose geographic location information is Shanghai.

Further, the first interface may further includes an index item of the geographic location information, where the index item is specifically geographic location information corresponding to the contact of the user. When the user selects geographic location information, the first interface displays an area corresponding to the geographic location information. For example, if contacts of the user correspond to areas including Beijing, Shanghai, and Shenzhen, when the user clicks Beijing, the first interface displays area Beijing and contacts corresponding to Beijing.

306. Upon receiving a request for a list of contacts in a specified area of the first interface, the instant messaging client acquires all first contacts, the geographic location information of the first contact being the specified area, and displays all first contacts in the specified area in the form of a list with a preset number of first contacts per page.

In this embodiment, the request may be specifically triggered by clicking a specific area by the user of the instant messaging client. When the user of the instant message client needs to view contacts in a specified area, the user may click the area to trigger the request for a list of contacts. Upon receiving the request for a list of contacts in a specified area of the first interface, the instant messaging client acquires all first contacts whose geographic location information is the specified area, and displays all first contacts. Preferably, all first contacts may be displayed in the specified area in a listing manner of displaying a preset number of contacts. When the number of first contacts is larger than a preset threshold, the first contacts are displayed on a plurality of pages, with a preset number of contacts being displayed on each page. This display method pertains to the prior art, which is not described herein any further.

It should be noted that, upon receiving a request for operating a specified area, the instant messaging client may perform operations on the contacts in the specified area according to the request. Analogously, upon receiving a request for geographic location information of a specified contact, the instant messaging client may correspondingly display the specified contact in the area of the first interface. For example, when the user of the instant messaging client clicks contact A and sends a request for displaying geographic location information of contact A, contact A is displayed in the area, corresponding to Shenzhen, of the first interface according to geographic location information "Shenzhen" of contact A, which may be marked using a specified identifier.

According to the method provided in this embodiment, geographic location information of a contact is acquired, and the contact is displayed in a corresponding position on a map interface according to the geographic location information of the contact. In this way, a contact list does not need to be re-defined, thereby simplifying operations on the contact list. In addition, contacts may be differentiated according to geographic locations thereof, such that the contacts are displayed more visually, facilitating simultaneous operations on the contacts pertaining to the same area.

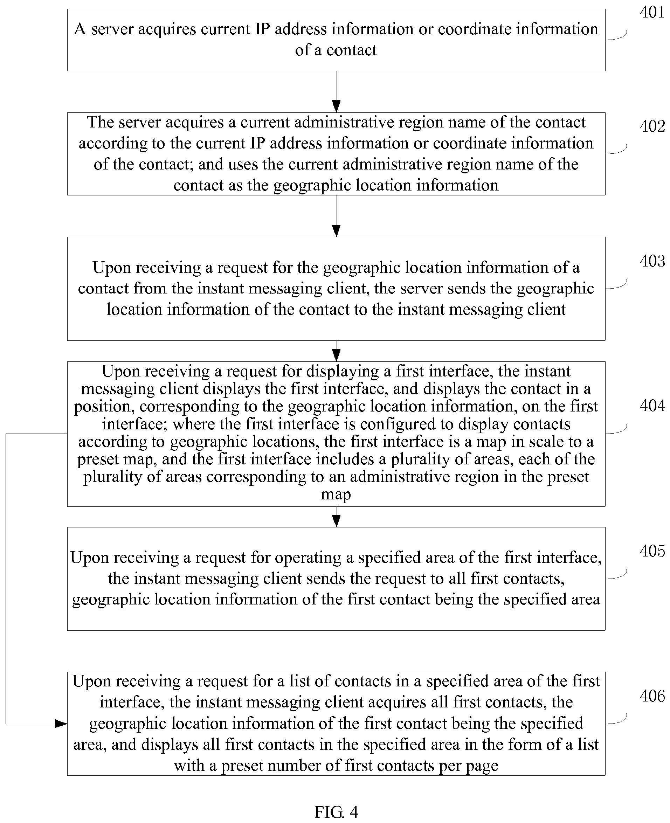

FIG. 4 is a flowchart of a contact display method according to an embodiment of the present disclosure. In this embodiment, interaction subjects may be an instant messaging client and a server, where the instant messaging client may be a QQ client, a TM client, or the like. Referring to FIG. 4, the method according to this embodiment specifically includes:
401. A server acquires current IP address information or coordinate information of a contact.

In this embodiment, when a user of an instant messaging client, i.e., a contact, logs in to a server, the server acquires an IP address of the contact when logging in to the server, and uses the acquired IP address as the current IP address information of the contact.

If the instant messaging client is a mobile terminal, when an instant messaging client user, i.e., a contact, logs in to a server, the server acquires coordinate information of the contact when logging in to the server, and uses the acquired coordinate information as the current coordinate information of the contact. The coordinate information may be acquired by means of GPS, or acquired by means of Location Based Services (LBS). A person skilled in the art may acquire that a GPS service-capable mobile terminal may acquire coordinate information thereof by means of GPS positioning, and provides the acquired coordinate information to the server when logging in to the server. By means of the LBS, geographic location information (geographic coordinates or geodetic coordinates) of a mobile terminal user may be acquired using a radio communication network (for example, a GSM network or a CDMA network) provided by an operator or using external positioning (for example, GPS positioning); in addition, the LBS, under support of a Geographic Information System (GIS) platform, provides a value-added service for the user concerning a subscribed service thereof.

402. The server acquires a current administrative region name of the contact according to the current IP address information or coordinate information of the contact; and uses the current administrative region name of the contact as the geographic location information.

In this embodiment, after the contact logs in to the instant messaging client, the server may acquire a login IP address of the contact, and confirms the acquired login IP address with an IP address database, to acquire the geographic location information of the IP address of the contact, i.e., administrative region information desired by the server, including information of province, city, and the like. When the instant messaging client is a mobile terminal, the server may acquire coordinate information of the contact when logging in to the server, and confirms the acquired coordinate information with a coordinate database, to acquire the geographic location information of the coordinate information of the contact, i.e., administrative region information desired by the server, including information of province, city, and the like.

A person skilled in the art may acquire that both conversion of the IP address information into geographic location information and acquisition of geographic location information according to coordinate information pertain to the prior art, which are not described herein any further. It should be noted that the geographic location information generated when the contact logs in to the server may be stored on the server, and may be emptied when the contact logs out of the server, such that geographic location information of a contact is generated in real time once the contact logs in to the server.

It should be noted that upon logging in to the server, the instant messaging client stores geographic location information thereof on the server, and alternatively may acquire geographic location information of contacts thereof. The contacts may include on-line or off-line contacts. The geographic location information of the contacts is used for displaying the contacts locally based on geographic locations thereof. A range of contacts displayed based on the geographic location information may also be predefined on the instant messaging client as displaying all contacts on the first interface or displaying only on-line contacts on the first interface, which is not limited in this embodiment.

403. Upon receiving a request for the geographic location information of a contact from the instant messaging client, the server sends the geographic location information of the contact to the instant messaging client.

404. Upon receiving a request for displaying a first interface, the instant messaging client displays the first interface, and displays the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map.

405. Upon receiving a request for operating a specified area of the first interface, the instant messaging client sends the request to all first contacts, geographic location information of the first contact being the specified area.

406. Upon receiving a request for a list of contacts in a specified area of the first interface, the instant messaging client acquires all first contacts, the geographic location information of the first contact being the specified area, and displays all first contacts in the specified area in the form of a list with a preset number of first contacts per page.

Steps 403-406 are analogous to steps 303-306, and are not described herein any further.

According to the method provided in this embodiment, geographic location information of a contact is acquired, and the contact is displayed in a corresponding position on a map interface according to the geographic location information of the contact. In this way, a contact list does not need to be re-defined, thereby simplifying operations on the contact list. In addition, contacts may be differentiated according to geographic locations thereof, such that the contacts are displayed more visually, facilitating simultaneous operations on the contacts pertaining to the same area.

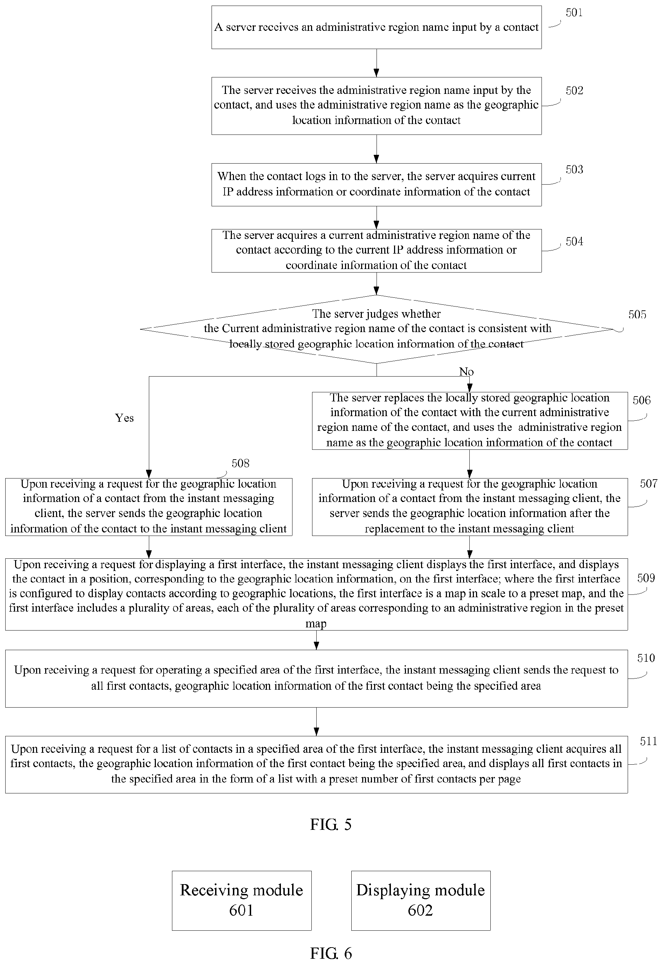

FIG. 5 is a flowchart of a contact display method according to an embodiment of the present disclosure. In this embodiment, interaction subjects may be an instant messaging client and a server, where the instant messaging client may be a QQ client, a TM client, or the like. Referring to FIG. 5, the method according to this embodiment specifically includes:
501. A server receives an administrative region name input by a contact.
502. The server receives an administrative region name input by the contact, and uses the administrative region name as the geographic location information of the contact.

Steps 501-502 are analogous to steps 301-302, and are not described herein any further.

503. When the contact logs in to the server, the server acquires current IP address information or coordinate information of the contact.

Step 503 is analogous to step 401, and is not described herein any further.

504. The server acquires a current administrative region name of the contact according to the current IP address information or coordinate information of the contact.

Step 504 is analogous to step 402, and is not described herein any further.

505. The server judges whether the current administrative region name of the contact is consistent with locally stored geographic location information of the contact.

If consistent, step 508 is performed.

If inconsistent, step 506 is performed.

In this embodiment, the geographic location when the contact logs in to the server is different from the geographic location indicated in data input by the contact; when the server has a permission to acquire the geographic location information generated in real time when the contact logs in to the server, the server acquires the login IP address information or coordinate information of the contact, acquires the current administrative region name of the contact according to the IP address information or coordinate information, and judges whether the current administrative region name of the contact is consistent with the geographic location information locally stored on the server. If consistent, step 508 is performed; and if inconsistent, step 506 is performed. For example, if the geographic location stored in the data of contact A is "Shenzhen" and a preset server of the contact may acquire the geographic location information of the contact when logging in to the server, when contact A logs in to the server, the server acquires login IP address information or coordinate information of contact A, acquires the current administrative region name "Beijing" of contact A according to the IP address information or coordinate information, and judges that the current administration region of contact A is inconsistent with the geographic location information stored on the server. In this case, step 506 is performed.

506. The server replaces the locally stored geographic location information of the contact with the current administrative region name of the contact, and uses the current administrative region name as the geographic location information of the contact.

In this embodiment, through replacement, the geographic location information of the contact is acquired in real time. This facilitates interaction between a user and contacts of the user, improves user experience, and achieves more visual display of the contacts.

507. Upon receiving a request for the geographic location information of a contact from the instant messaging client, the server sends the geographic location information after the replacement to the instant messaging client, and step 509 is performed.

508. Upon receiving a request for the geographic location information of a contact from the instant messaging client, the server sends the geographic location information of the contact to the instant messaging client, and step 509 is performed.

509. Upon receiving a request for displaying a first interface, the instant messaging client displays the first interface, and displays the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map.

510. Upon receiving a request for operating a specified area of the first interface, the instant messaging client sends the request to all first contacts, geographic location information of the first contact being the specified area.

In this embodiment, upon receiving a geographic location information-specific request with respect to a contact, the instant messaging client performs corresponding operations on the contact with the geographic location information according to the specific content of request.

511. Upon receiving a request for a list of contacts in a specified area of the first interface, the instant messaging client acquires all first contacts, the geographic location information of the first contact being the specified area, and displays all first contacts in the specified area in the form of a list with a preset number of first contacts per page.

Steps 509-511 are analogous to steps 304-306, and are not described herein any further.

It should be noted that upon logging in to the server, the instant messaging client stores geographic location information thereof on the server, and alternatively may acquire geographic location information of contacts thereof. The contacts may include on-line or off-line contacts. The geographic location information of the contacts is used for displaying the contacts locally based on geographic locations thereof. A range of contacts displayed based on the geographic location information may also be predefined on the instant messaging client as displaying all contacts on the first interface or displaying only on-line contacts on the first interface, which is not limited in this embodiment.

FIG. 6 is a schematic structural diagram of an instant messaging client according to an embodiment of the present disclosure. Referring to FIG. 6, the instant messaging client according to this embodiment includes:
a receiving module 601, configured to receive geographic location information of a contact from a server; and
a displaying module 602, configured to: upon receiving a request for displaying a first interface, display the first interface, and display the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map.

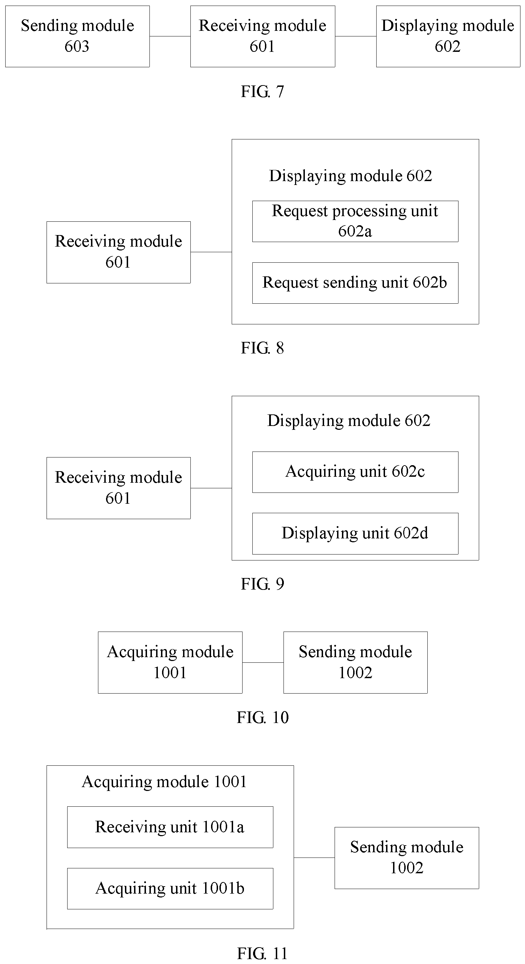

FIG. 7 is a schematic structural diagram of another instant messaging client according to an embodiment of the present disclosure. Referring to FIG. 7, the instant messaging client according to this embodiment further includes:
a sending module 603, configured to send a request for geographic location information to the server.

Correspondingly, the receiving module 601 is configured to receive the geographic location information of the contact from the server, where the geographic location information is an administrative region name received by the server, or the geographic location information is an administrative region name acquired by the server according to received current IP address information or coordinate information of the contact.

In another embodiment, the geographic location information is the geographic location information of the contact sent by the server, or the geographic location information is determined by the server according to the received administrative region name and the current IP address information or coordinate information of the contact.

FIG. 8 is a schematic structural diagram of still another instant messaging client according to an embodiment of the present disclosure. Referring to FIG. 8, the displaying module 602 includes: a request processing unit 602a and a request sending unit 602b.

The request processing unit 602a is configured to receive a request for operating a specified area of the first interface.

The request sending unit 602b is configured to: upon the request processing unit 602a receives the request for operating a specified area of the first interface, send the request to all first contacts, geographic location information of the first contact being the specified area.

FIG. 9 is a schematic structural diagram of still another instant messaging client according to an embodiment of the present disclosure. Referring to FIG. 9, the displaying module 602 includes:
an acquiring unit 602c, configured to: acquire all first contact when the instant messaging client receives a request for a list of contacts in a specified area of the first interface, geographic location information of the first contact being the specified area; and
a displaying unit 602d, configured to display all first contacts, acquired by the acquiring unit, in the specified area in the form of a list with a preset number of first contacts per page.

In this embodiment, the instant messaging client may be specifically a mobile terminal or PC installed with an instant messaging client. The instant messaging client according to this embodiment is based on the same inventive concept as the method for displaying a contact provided in the embodiments of the present disclosure, where the specific implementation is elaborated in the method embodiments, which is not be detailed herein any further.

FIG. 10 is a schematic structural diagram of a server according to an embodiment of the present disclosure. Referring to FIG. 10, the server according to this embodiment includes:
an acquiring module 1001, configured to acquire geographic location information of a contact; and
a sending module 1002, configured to: upon receiving a request for geographic location information from an instant messaging client, send the geographic location information of the contact to the instant messaging client, such that the instant messaging client displays the first interface upon receiving a request for displaying the first interface, and displays the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map.

FIG. 11 is a schematic structural diagram of another server according to an embodiment of the present disclosure. Referring to FIG. 11, the acquiring module 1001 includes:
a receiving unit 1001a, configured to receive an administrative region name input by the contact, and use the administrative region name as the geographic location information of the contact; or
an acquiring unit 1001b, configured to: acquire current IP address information or coordinate information of the contact; acquire a current administrative region name of the contact according to the current IP address information or coordinate information of the contact; and use the current administrative region name of the contact as the geographic location information.

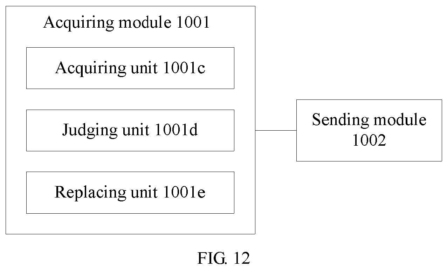

FIG. 12 is a schematic structural diagram of still another server according to an embodiment of the present disclosure. Referring to FIG. 12, the acquiring module 1001 includes:
an acquiring unit 1001c, configured to acquire current IP address information or coordinate information of the contact;
a judging unit 1001d, configured to acquire a current administrative region name of the contact according to the current IP address information or coordinate information of the contact, and judge whether the current administrative region name of the contact is consistent with locally stored geographic location information of the contact;
a replacing unit 1001e, configured to: when the judging unit 1001d judges that the current administrative region name of the contact is inconsistent with the locally stored geographic location information of the contact, replace the locally stored geographic location information of the contact with the current administrative region name of the contact, and use the current administrative region name as the geographical location information of the contact.

The instant messaging client is such a mobile terminal as mobile phone, MP3 or PDA.

The server provided in this embodiment is based on the same inventive concept as the method embodiments. Therefore, the detailed implementation may refer to the description of the method embodiments of the present disclosure, which is not detailed here.

An embodiment of the present disclosure further provides a contact display system. The system includes:
an instant messaging client, configured to: receive geographic location information of a contact from a server; and upon receiving a request for displaying a first interface, display the first interface and display the contact in a position, corresponding to the geographic location information, on the first interface; where the first interface is configured to display contacts according to geographic locations, the first interface is a map in scale to a preset map, and the first interface includes a plurality of areas, each of the plurality of areas corresponding to an administrative region in the preset map; and
a server, configured to: acquire geographic location information of a contact; and upon receiving a request for geographic location information from an instant messaging client, send the geographic location information of the contact to the instant messaging client, such that, upon receiving a request for displaying a first interface, the instant messaging client displays the first interface, and display the contact in a position, corresponding to the geographic location information, on the first interface; where the first interface includes a plurality of areas, each of the plurality of areas corresponding to an administrative region in the preset map.

The system provided in this embodiment includes the above-described instant messaging client and server, and is based on the same inventive concept as the method embodiment. Therefore, the detailed implementation may refer to the description of the method embodiments of the present disclosure, which is not detailed here.

Persons of ordinary skill in the art should understand that all or part of steps of the preceding methods may be implemented by hardware or hardware following instructions of programs. The programs may be stored in a non-transitory computer-readable storage medium and may be executed by at least one processor. The storage medium may be a read-only memory, a magnetic disk, or a compact disc-read only memory.

Described above are merely preferred embodiments of the present disclosure, but are not intended to limit the present disclosure. Any modification, equivalent replacement, or improvement made without departing from the principle of the present disclosure should fall within the protection scope of the present disclosure.

## Claims

1. A contact display method, executable by a server, the method comprising:
acquiring an administrative region name input by each of at least one contact and using it as geographic location information of each of at least one contact; and
upon receiving a request for geographic location information from an instant messaging client, sending the geographic location information of the at least one contact to the instant messaging client, the geographic location information being configured to be used by the instant messaging client in order to display a first interface upon receiving a request for displaying the first interface, and to display the at least one contact in a position, corresponding to his/their geographic location information, on the first interface, wherein the first interface is configured to display contacts according to geographic locations, the first interface is a map in scale to a preset map, and the first interface comprises a plurality of areas, each of the plurality of areas corresponding to an administrative region in the preset map, the geographic location information is an administrative region name, wherein the instant messaging client is a mobile terminal;
wherein the method further comprises:
acquiring login IP address information of the at least one contact under the condition that the server has a permission to acquire the geographic location information generated in real time when the at least one contact logs in to the server;
acquiring a current administrative region name of the at least one contact according to the IP address information;
judging whether the current administrative region name of the at least one contact is consistent with the geographic location information locally stored on the server;
replacing, if inconsistent, the locally stored geographic location information of the at least one contact with the current administrative region name of the at least one contact; and
using the current administrative region name as the geographic location information of the at least one contact.

2. A contact display method, executable by a contact display system comprising an instant messaging client and a server, wherein the instant messaging client is a mobile terminal, the method comprising:
acquiring, by the server, an administrative region name input by each of at least one contact and using it as geographic location information of each of at least one contact;
acquiring, by the instant messaging client, geographic location information of each of at least one contact from a server; and
upon receiving a request for displaying a first interface, displaying, by the instant messaging client, the first interface, and displaying the at least one contact in a position, corresponding to his/their geographic location information, on the first interface; wherein the first interface is configured to display contacts according to geographic locations, the first interface is a map in scale to a preset map, and the first interface comprises a plurality of areas, each of the plurality of areas corresponding to an administrative region in the preset map;
upon receiving a request for operating a specified area of the first interface, wherein the request refers to a contact-directed operation request, sending, by the instant messaging client, the request to each of the at least one contacts having a geographic location within the specified area;
wherein the acquiring, by the instant messaging client, geographic location information of a contact from the server specifically comprises:
sending a request for geographic location information to the server; and
receiving the geographic location information of the at least one contact from the server,
wherein the method further comprises:
acquiring, by the server, login IP address information of the at least one contact under the condition that when the server has a permission to acquire the geographic location information generated in real time when the at least one contact logs in to the server;
acquiring, by the server, a current administrative region name of the at least one contact according to the IP address information;
judging, by the server, whether the current administrative region name of the at least one contact is consistent with the geographic location information locally stored on the server;
replacing, if inconsistent, by the server, the locally stored geographic location information of the at least one contact with the current administrative region name of the at least one contact; and
using, by the server, the current administrative region name as the geographic location information of the at least one contact.

3. The method according to claim 2, wherein the geographic location information is determined by the server according to the received administrative region name and the current IP address information or coordinate information of the contact.

4. The method according to any one of claims 2 to 3, wherein after the displaying, by the instant messaging client, the first interface, and displaying the at least one contact in a position, corresponding to the geographic location information, on the first interface, the method further comprises:
upon receiving a request for a list of contacts in a specified area of the first interface, acquiring, by the instant messaging client, all first contacts, the geographic location information of the first contact being the specified area, and displaying all first contacts in the specified area in the form of a list with a preset number of first contacts per page.

5. A contact display system, comprising an instant messaging client and a server, wherein the instant messaging client is a mobile terminal, and the system is configured to:
acquire, by the server, an administrative region name input by each of at least one contact and use it as geographic location information of each of at least one contact;
acquire, by the instant messaging client, geographic location information of each of at least one contact from a server; and
upon receiving a request for displaying a first interface, display, by the instant messaging client, the first interface, and display the at least one contact in a position, corresponding to his/their geographic location information, on the first interface; wherein the first interface is configured to display contacts according to geographic locations, the first interface is a map in scale to a preset map, and the first interface comprises a plurality of areas, each of the plurality of areas corresponding to an administrative region in the preset map;
upon receiving a request for operating a specified area of the first interface, wherein the request refers to a contact-directed operation request, send, by the instant messaging client, the request to each of the at least one contacts having a geographic location within the specified area;
wherein the acquiring, by the instant messaging client, geographic location information of a contact from the server specifically comprises:
sending a request for geographic location information to the server; and
receiving the geographic location information of the at least one contact from the server,
wherein the system is further configured to:
acquire, by the server, login IP address information of the at least one contact under the condition that when the server has a permission to acquire the geographic location information generated in real time when the at least one contact logs in to the server;
acquire, by the server, a current administrative region name of the at least one contact according to the IP address information;
judge, by the server, whether the current administrative region name of the at least one contact is consistent with the geographic location information locally stored on the server;
replace, if inconsistent, by the server, the locally stored geographic location information of the at least one contact with the current administrative region name of the at least one contact; and
use, by the server, the current administrative region name as the geographic location information of the at least one contact.

6. The contact display system according to claim 5, wherein the geographic location information is the geographic location information of the contact sent by the server, or the geographic location information is determined by the server according to a received administrative region name and current IP address information of the contact.

7. The contact display system according to claim 5, wherein the instant messaging client is further configured to: acquire all first contact when the instant messaging client receives a request for a list of contact in a specified area of the first interface, geographic location information of the first contact being the specified area; and
display all first contacts, in the specified area in the form of a list with a preset number of first contacts per page.

## Patentansprüche

1. Kontaktanzeigeverfahren, das von einem Server ausgeführt werden kann, wobei das Verfahren umfasst:
Erfassen eines Verwaltungsregionsnamens, der von jedem mindestens einer Kontaktperson eingegeben wird, und Verwenden dieses Namens als geografische Standortinformation für jede der mindestens einen Kontaktperson; und
bei Empfang einer Anfrage nach geographischen Standortinformation von einem Instant-Messaging-Client, Senden der geographischen Standortinformation des mindestens einen Kontakts an den Instant-Messaging-Client, wobei die geographischen Standortinformation so konfiguriert ist, dass sie von dem Instant-Messaging-Client verwendet wird, um eine erste Schnittstelle bei Empfang einer Anfrage zur Anzeige der ersten Schnittstelle anzuzeigen und den mindestens einen Kontakt an einer Position, die seiner geographischen Standortinformation entspricht, auf der ersten Schnittstelle anzuzeigen, wobei die erste Schnittstelle so konfiguriert ist, dass sie Kontakte gemäß geographischen Standorten anzeigt, die erste Schnittstelle eine Karte im Maßstab einer voreingestellten Karte ist und die erste Schnittstelle eine Vielzahl von Bereichen umfasst, wobei jeder der Vielzahl von Bereichen einer Verwaltungsregion in der voreingestellten Karte entspricht, die geographische Standortinformation ein Name einer Verwaltungsregion ist, wobei der Instant-Messaging-Client ein mobiles Endgerät ist;
wobei das Verfahren ferner umfasst:
Erfassen von Login-IP-Adressinformation des mindestens einen Kontakts unter der Bedingung, dass der Server die Erlaubnis hat, die geografische Standortinformation zu erfassen, die in Echtzeit erzeugt wird, wenn sich der mindestens eine Kontakt beim Server anmeldet;
Erfassen eines aktuellen Verwaltungsregionsnamens des mindestens einen Kontakts anhand der IP-Adressinformation;
Beurteilen, ob der aktuelle Name der Verwaltungsregion des mindestens einen Kontakts mit der lokal auf dem Server gespeicherten geografischen Standortinformation übereinstimmt;
Ersetzen der lokal gespeicherten geografischen Standortinformation des mindestens einen Kontakts durch den aktuellen Namen der Verwaltungsregion des mindestens einen Kontakts, falls diese nicht übereinstimmen; und
Verwenden des Namens der aktuellen Verwaltungsregion als geografische Standortinformation des mindestens einen Kontakts.

2. Kontaktanzeigeverfahren, das von einem Kontaktanzeigesystem ausgeführt werden kann, das einen Instant-Messaging-Client und einen Server umfasst, wobei der Instant-Messaging-Client ein mobiles Endgerät ist, wobei das Verfahren umfasst:
Erfassen, durch den Server, eines Verwaltungsregionsnamens, der von jedem von mindestens einem Kontakt eingegeben wird, und Verwenden dieses Namens als geografische Standortinformation von jedem von mindestens einem Kontakt;
Erfassen von geografischer Standortinformation von mindestens einem Kontakt von einem Server durch den Instant-Messaging-Client; und
bei Empfang einer Anforderung zum Anzeigen einer ersten Schnittstelle, Anzeigen der ersten Schnittstelle durch den Instant-Messaging-Client und Anzeigen des mindestens einen Kontakts an einer Position, die seiner/ihrer geografischen Standortinformation entspricht, auf der ersten Schnittstelle; wobei die erste Schnittstelle so konfiguriert ist, dass sie Kontakte entsprechend geografischen Standorten anzeigt, die erste Schnittstelle eine Karte im Maßstab einer voreingestellten Karte ist und die erste Schnittstelle eine Vielzahl von Bereichen umfasst, wobei jeder der Vielzahl von Bereichen einer Verwaltungsregion in der voreingestellten Karte entspricht;
bei Empfang einer Anforderung zum Betrieb eines bestimmten Bereichs der ersten Schnittstelle, wobei sich die Anforderung auf eine kontaktgerichtete Betriebsanforderung bezieht, Senden der Anforderung durch den Instant-Messaging-Client an jeden der mindestens einen Kontakte mit einem geografischen Standort innerhalb des bestimmten Bereichs;
wobei das Erfassen von geografischer Standortinformation eines Kontakts vom Server durch den Instant-Messaging-Client insbesondere umfasst:
Senden einer Anfrage nach geografischer Standortinformation an den Server; und
Empfangen der geografischen Standortinformation des mindestens einen Kontakts vom Server,
wobei das Verfahren ferner umfasst:
Erfassen von Login-IP-Adressinformation des mindestens einen Kontakts durch den Server unter der Bedingung, dass der Server die Erlaubnis hat, die geografische Standortinformation zu erfassen, die in Echtzeit erzeugt wird, wenn sich der mindestens eine Kontakt beim Server anmeldet;
Erfassen eines aktuellen Verwaltungsregionsnamens des mindestens einen Kontakts durch den Server gemäß den IP-Adressinformation;
Beurteilen durch den Server, ob der aktuelle Name der Verwaltungsregion des mindestens einen Kontakts mit der lokal auf dem Server gespeicherten geografischen Standortinformation übereinstimmt;
Ersetzen der lokal gespeicherten geografischen Standortinformation des mindestens einen Kontakts durch den Server mit dem aktuellen Verwaltungsregionsnamen des mindestens einen Kontakts, falls dieser nicht konsistent ist; und
Verwendung des Namens der aktuellen Verwaltungsregion durch den Server als geografische Standortinformation des mindestens einen Kontakts.

3. Verfahren nach Anspruch 2, wobei die geografische Standortinformation vom Server gemäß dem empfangenen Namen der Verwaltungsregion und der aktuellen IP-Adressinformation oder Koordinateninformation des Kontakts bestimmt wird.

4. Verfahren nach einem der Ansprüche 2 bis 3, wobei nach dem Anzeigen der ersten Schnittstelle durch den Instant-Messaging-Client und dem Anzeigen des mindestens einen Kontakts an einer Position, die der geografischen Standortinformation entspricht, auf der ersten Schnittstelle das Verfahren ferner umfasst:
beim Empfang einer Anfrage nach einer Liste von Kontakten in einem bestimmten Bereich der ersten Schnittstelle, Erfassen aller ersten Kontakte durch den Instant-Messaging-Client, wobei die geografische Standortinformation des ersten Kontakts der bestimmte Bereich ist, und Anzeigen aller ersten Kontakte in dem bestimmten Bereich in Form einer Liste mit einer voreingestellten Anzahl von ersten Kontakten pro Seite.

5. Kontaktanzeigesystem, das einen Instant-Messaging-Client und einen Server umfasst, wobei der Instant-Messaging-Client ein mobiles Endgerät ist und das System konfiguriert ist zum:
Erfassen, durch den Server eines Namens einer Verwaltungsregion, der von jedem von mindestens einem Kontakt eingegeben wird, und ihn als geografische Standortinformation von jedem des mindestens einen Kontakts zu verwenden;
Erfassen, durch den Instant-Messaging-Client, von geografischer Standortinformation von jedem der mindestens einen Kontakte von einem Server; und
bei Empfang einer Anforderung zur Anzeige einer ersten Schnittstelle, Anzeigen der ersten Schnittstelle durch den Instant-Messaging-Client und Anzeigen des mindestens einen Kontakts an einer Position, die seiner/ihrer geografischen Standortinformation entspricht, auf der ersten Schnittstelle; wobei die erste Schnittstelle so konfiguriert ist, dass sie Kontakte entsprechend geografischen Standorten anzeigt, die erste Schnittstelle eine Karte im Maßstab einer voreingestellten Karte ist und die erste Schnittstelle eine Vielzahl von Bereichen umfasst, wobei jeder der Vielzahl von Bereichen einer Verwaltungsregion in der voreingestellten Karte entspricht;
bei Empfang einer Anforderung zum Betrieb eines bestimmten Bereichs der ersten Schnittstelle, wobei sich die Anforderung auf eine kontaktgerichtete Betriebsanforderung bezieht, Senden der Anforderung durch den Instant-Messaging-Client an jeden der mindestens einen Kontakte, die einen geografischen Standort innerhalb des bestimmten Bereichs haben;
wobei das Erfassen von geografischer Standortinformation eines Kontakts vom Server durch den Instant-Messaging-Client insbesondere umfasst:
Senden einer Anfrage nach geografischer Standortinformation an den Server; und
Empfangen der geografischen Standortinformation des mindestens einen Kontakts vom Server,
wobei das System ferner konfiguriert ist zum:
Erfassen von Login-IP-Adressinformation des mindestens einen Kontakts durch den Server unter der Bedingung, dass der Server die Erlaubnis hat, die geografische Standortinformation zu erfassen, die in Echtzeit erzeugt wird, wenn sich der mindestens eine Kontakt beim Server anmeldet;
Erfassen eines aktuellen Verwaltungsregionsnamens des mindestens einen Kontakts durch den Server anhand der IP-Adressinformation;
Beurteilen durch den Server, ob der aktuelle Name der Verwaltungsregion des mindestens einen Kontakts mit der lokal auf dem Server gespeicherten geografischen Standortinformation übereinstimmt;
Ersetzen der lokal gespeicherten geografischen Standortinformation des mindestens einen Kontakts durch den Server mit dem aktuellen Verwaltungsregionsnamen des mindestens einen Kontakts, falls dieser nicht konsistent ist; und
Verwenden des Namens der aktuellen Verwaltungsregion durch den Server als geografische Standortinformation des mindestens einen Kontakts.

6. Kontaktanzeigesystem nach Anspruch 5, wobei es sich bei den geografischen Standortinformation um die vom Server gesendete geografische Standortinformation des Kontakts handelt oder die geografische Standortinformation vom Server gemäß einem empfangenen Verwaltungsregionsnamen und aktueller IP-Adressinformation des Kontakts bestimmt wird.

7. Kontaktanzeigesystem nach Anspruch 5, wobei der Instant-Messaging-Client ferner so konfiguriert ist, dass er: alle ersten Kontakte erfasst, wenn der Instant-Messaging-Client eine Anfrage nach einer Liste von Kontakten in einem bestimmten Bereich der ersten Schnittstelle empfängt, wobei die geografische Standortinformation des ersten Kontakts der bestimmte Bereich sind; und
alle Erstkontakte im angegebenen Bereich in Form einer Liste mit einer voreingestellten Anzahl von Erstkontakten pro Seite anzeigt.

## Revendications

1. Procédé d'affichage de contact, exécutable par un serveur, le procédé consistant à :
acquérir un nom de région administrative entré par au moins un contact et l'utiliser en tant qu'information de localisation géographique de chacun d'au moins un contact ; et
à la réception d'une demande d'information de localisation géographique en provenance d'un client de message instantanée, envoyer l'information de localisation géographique de l'au moins un contact au client de messagerie instantanée, l'information de localisation géographique étant configurée pour être utilisée par le client de messagerie instantanée afin d'afficher une première interface à la réception d'une demande d'affichage de la première interface, et afin d'afficher l'au moins un contact dans une position, correspondant à son information de localisation géographique, sur la première interface, la première interface étant configurée pour afficher des contacts selon des localisations géographiques, la première interface étant une carte à l'échelle d'une carte prédéfinie, et la première interface comprend une pluralité de zones, chaque zone parmi la pluralité de zones correspondant à une région administrative dans la carte prédéfinie, l'information de localisation géographique est un nom de région administrative, le client de messagerie instantanée étant un terminal mobile ;
le procédé consistant en outre à :
acquérir les informations d'adresse IP de connexion de l'au moins un contact à condition que le serveur ait une autorisation d'acquérir l'information de localisation géographique générée en temps réel lorsque l'au moins un contact se connecte au serveur ;
acquérir un nom de région administrative actuel de l'au moins un contact selon les informations d'adresse IP ;
estimer si le nom de région administrative actuel de l'au moins un contact est cohérent avec l'information de localisation géographique stockée localement sur le serveur ;
remplacer, en cas d'incohérence, l'information de localisation géographique stockée localement de l'au moins un contact par le nom de région administrative de l'au moins un contact ; et
utiliser le nom de région administrative actuel en tant qu'information de localisation géographique de l'au moins un contact.

2. Procédé d'affichage de contact, exécutable par un système d'affichage de contact comprenant un client de messagerie instantanée et un serveur, le client de message instantanée étant un terminal mobile, le procédé consistant à :
acquérir, par le serveur, un nom de région administrative entré par au moins un contact et l'utiliser en tant qu'information de localisation géographique d'au moins un contact ;
acquérir, par le client de messagerie instantanée, une information de localisation géographique d'au moins un contact à partir d'un serveur ; et
à la réception d'une demande d'affichage d'une première interface, afficher, par le client de messagerie instantanée, la première interface, et afficher l'au moins un contact dans une position correspondant à son information de localisation géographique, sur la première interface ; la première interface étant configurée pour afficher des contacts en fonction des localisations géographiques, la première interface étant une carte à l'échelle d'une carte prédéfinie, et la première interface comprenant une pluralité de zones, chaque zone parmi la pluralité de zones correspondant à une région administrative dans la carte prédéfinie ;
à la réception d'une demande de mise en œuvre d'une zone spécifique de la première interface, la demande faisant référence à une demande d'opération dirigée vers le contact, envoyer, par le client de messagerie instantanée, la demande à l'au moins un contact ayant une localisation géographique dans la zone spécifiée ;
dans lequel l'acquisition, par le client de messagerie instantanée, de l'information de localisation géographique d'un contact à partir du serveur consistant en particulier à :
envoyer une demande d'information de localisation géographique au serveur ; et
recevoir l'information de localisation géographique de l'au moins un contact en provenance du serveur,
le procédé consistant en outre à :
acquérir, par le serveur, les informations d'adresse IP de connexion de l'au moins un contact à condition que le serveur ait une autorisation pour acquérir l'information de localisation géographique générée en temps réel lorsque l'au moins un contact se connecte au serveur ;
acquérir, par le serveur, un nom de région administrative actuel de l'au moins un contact selon les informations d'adresse IP ;
estimer, par le serveur, si le nom de région administrative actuel de l'au moins un contact est cohérent avec l'information de localisation géographique stockée localement sur le serveur ;
remplacer, si en cas d'incohérence, par le serveur, l'information de localisation géographique stockée localement de l'au moins un contact par le nom de région administrative de l'au moins un contact ; et
utiliser, par le serveur, le nom de région administrative en tant qu'information de localisation géographique de l'au moins un contact.

3. Procédé selon la revendication 2, dans lequel l'information de localisation géographique est déterminée par le serveur selon le nom de région administrative reçu et les informations d'adresse IP actuelles ou les informations de coordonnées du contact.

4. Procédé selon l'une quelconque des revendications 2 à 3, dans lequel une fois la première interface affichée, par le client de messagerie instantanée, et l'affichage de l'au moins un contact dans une position, correspondant à l'information de localisation géographique, sur la première interface, le procédé consiste en outre à :
à la réception d'une demande d'une liste de contacts dans une zone spécifiée de la première interface, acquérir, par le client de messagerie instantanée, tous les premiers contacts, l'information de localisation géographique du premier contact étant la zone spécifiée, et afficher tous les premiers contacts dans la zone spécifiée sous la forme d'une liste avec un nombre prédéfini de premiers contacts par page.

5. Système d'affichage de contact, comprenant un client de messagerie instantanée et un serveur, le client de messagerie instantanée étant un terminal mobile, le système étant configuré pour :
acquérir, par le serveur, un nom de région administrative entré par au moins un contact et l'utiliser en tant qu'information de localisation géographique d'au moins un contact ;
acquérir, par le client de messagerie instantanée, une information de localisation géographique d'au moins un contact à partir d'un serveur ; et
à la réception d'une demande d'affichage d'une première interface, afficher, par le client de messagerie instantanée, la première interface, et afficher l'au moins un contact dans une position correspondant à son information de localisation géographique, sur la première interface ; la première interface étant configurée pour afficher des contacts en fonction des localisations géographiques, la première interface étant une carte à l'échelle d'une carte prédéfinie, et la première interface comprenant une pluralité de zones, chaque zone de la pluralité de zones correspondant à une région administrative dans la carte prédéfinie ;
à la réception d'une demande de mise en œuvre d'une zone spécifique de la première interface, la demande faisant référence à une demande de mise en œuvre dirigée vers le contact, envoyer, par le client de messagerie instantanée, la demande à l'au moins un contact ayant une localisation géographique dans la zone spécifiée ;
dans lequel l'acquisition, par le client de messagerie instantanée, de l'information de localisation géographique d'un contact à partir du serveur consistant en particulier à :
envoyer une demande d'information de localisation géographique au serveur ; et
recevoir l'information de localisation géographique de l'au moins un contact en provenance du serveur,
le système étant en outre configuré pour :
acquérir, par le serveur, les informations d'adresse IP de connexion de l'au moins un contact à condition que le serveur ait une autorisation pour acquérir l'information de localisation géographique générée en temps réel lorsque l'au moins un contact se connecte au serveur ;
acquérir, par le serveur, un nom de région administrative actuel de l'au moins un contact selon les informations d'adresse IP ;
estimer, par le serveur, si le nom de région administrative actuel de l'au moins un contact est cohérent avec l'information de localisation géographique stockée localement sur le serveur ;
remplacer, en cas d'incohérence, par le serveur, l'information de localisation géographique stockée localement de l'au moins un contact avec le nom de région administrative de l'au moins un contact ; et
utiliser, par le serveur, le nom de région administrative en tant qu'information de localisation géographique de l'au moins un contact.

6. Système d'affichage de contact selon la revendication 5, dans lequel l'information de localisation géographique est l'information de localisation géographique du contact envoyé par le serveur, ou l'information de localisation géographique est déterminée par le serveur en fonction d'un nom de région administrative reçu et des informations d'adresse IP du contact.

7. Système d'affichage de contact selon la revendication 5, dans lequel le client de messagerie instantanée est en outre configuré pour : acquérir tous les premiers contacts lorsque le client de messagerie instantanée reçoit une demande d'une liste de contacts dans une zone spécifiée de la première interface, l'information de localisation géographique du premier contact étant la zone spécifiée ; et
afficher tous les premiers contacts, dans la zone spécifiée sous la forme d'une liste avec un nombre prédéfini de premiers contacts par page.
